# EUROPÄISCHE PATENTSCHRIFT

(11) **EP 3 049 639 B1**
(45) Veröffentlichungstag und Bekanntmachung des Hinweises auf die Patenterteilung: **27.09.2017**
(21) Anmeldenummer: 14809620.9
(22) Anmeldetag: 03.12.2014
(51) Int. Cl.: F01D 25/00, F02C 7/22

(54) **GASTURBINE MIT BYPASSLEITUNG ZUR VERBESSERTEN BRENNSTOFFLEITUNGSSPÜLUNG SOWIE VERFAHREN ZUM SPÜLEN EINER GASTURBINE**
GAS TURBINE WITH A BYPASS LINE FOR IMPROVED FUEL LINE FLUSHING, AND METHOD FOR FLUSHING A GAS TURBINE
TURBINE À GAZ COMPORTANT UNE CONDUITE DE DÉRIVATION POUR UN MEILLEUR NETTOYAGE DE CONDUITE DE CARBURANT ET PROCÉDÉ DE NETTOYAGE D'UNE TURBINE À GAZ

(30) Priorität: 09.12.2013 DE 102013225254
(43) Veröffentlichungstag der Anmeldung: 03.08.2016
(73) Patentinhaber: Siemens Aktiengesellschaft, 80333 München (DE)
(72) Erfinder: MEISL, Jürgen, 45478 Mülheim an der Ruhr (DE); SMITH, James, 46348 Raesfeld (DE)
(86) Internationale Anmeldenummer: PCT/EP2014/076370
(87) Internationale Veröffentlichungsnummer: WO 2015/086390

(56) Entgegenhaltungen:
- EP-A1- 0 939 220
- EP-A1- 2 216 529
- US-A1- 2011 146 807

## Beschreibung

Die vorliegende Erfindung betrifft eine Gasturbine, die ein verbessertes Spülverhalten bei Verdrängungsspülung von Brennstoff aus einer Brennstoffleitung aufweist, sowie ein Verfahren zum Betrieb einer solchen Gasturbine.

Der Betrieb einer Gasturbine mit flüssigen Brennstoffen, etwa Öl, erfordert in regelmäßigen Abständen eine Wasserspülung der Brennstoffleitungen, damit in den Brennstoffleitungen zurückbleibende Ölrückstände nicht verbrennen bzw. verkoken und damit zu Schäden und Betriebsstörungen führen können. Nach dem der Anmelderin bekannten internen Stand der Technik werden Gasturbinen typischerweise über eine Spülwasserleitung mit Spülwasser unter Druck versorgt, so dass das unter Druck stehende Spülwasser den in den Brennstoffleitungen vorhandenen Brennstoff zur Reinigung entfernen kann. Hierbei kommt es zu einer Verdrängungsspülung, wobei der verdrängte Brennstoff mit Teilen des Spülwassers in ein die Gasturbine versorgendes Brennstoffvorratsbehältnis zurückgeleitet werden kannn. Erfolgt diese Rückführung über einen ungeeignet langen Zeitraum, insbesondere während des Abfahrens der Gasturbine, kann der Verdichterenddruck der Gasturbine so niedrig werden, dass die Verdrängungsspülung angehalten werden muss, um zu verhindern, dass Brennstoff bzw. Spülwasser aus den Brennstoffleitungen unerwünscht in den Brenner und damit in die Brennkammer der Gasturbine eindringen.

Insofern sieht der nach dem Stand der Technik bekannte Spülvorgang vor, die Spüldauer insbesondere bei Abfahren der Gasturbine zeitlich zu beschränken, um derartige Nachteile zu vermeiden. Spühldauern von weniger als einer halben Minute werden hierbei meist gewählt, um einen sicheren Betrieb gewährleisten zu können.

Nachteilig an einer solchen zeitlichen Beschränkung ist jedoch, dass die Spülung der Brennstoffleitungen mittels des Spülwassers nicht ausreichend vollständig erfolgt, und so weiterhin ungewünscht große Mengen an flüssigem Brennstoff, in den Brennstoffleitungen zurückbleiben können. Insofern ergibt sich das technische Erfordernis, eine Gasturbine vorzuschlagen, welche eine verbesserte Spülung der Brennstoffleitungen ermöglicht. Ebenso ist ein Verfahren vorzuschlagen, welches die aus dem Stand der Technik bekannten Nachteile vermeidet, und eine verbesserte und effizientere Spülung der Brennstoffleitungen der Gasturbine erlaubt. Dies soll insbesondere während des Abfahrens der Gasturbine erfolgen.

Die EP 0 939 220 A1 zeigt ein Brennstoffsystem einer Gasturbine in Kombination mit einem Spülsystem. Eine erste und eine zweite Zufuhrleitungen sind vorgesehen, die an einem Speisepunkt miteinander verbunden sind. Die zweite Leitung ist vorgesehen für ein Wasserinjektionssystem, über welches Wasser in die Verbrennungskammer zerstäubt. Die zweite Leitung ist über eine Verbindungsleitung (mit dem Einspeisungspunkt für die erste Speiseleitung angeschlossen ist. In der Verbindungsleitung ein Rückschlagventil oder ein Ventil eingebaut ist.

Diese der Erfindung zugrundeliegenden Aufgaben werden gelöst durch eine Gasturbine gemäß Anspruch 1 sowie durch ein Verfahren zum Spülen einer solchen vorab wie auch nachfolgend beschriebenen Gasturbine nach Anspruch 5.

Insbesondere werden die der Erfindung zugrundeliegenden Aufgaben gelöst durch eine Gasturbine mit einem Brenner, welche mindestens eine Brennstoffzuleitung und mindestens eine Brennstoffableitung aufweist, wobei mit der Brennstoffzuleitung eine Spülwasserleitung fluidtechnisch verschaltet ist, und wobei mit der Brennstoffableitung ein Lecköltank über eine Drainageleitung fluidtechnisch verschaltet ist und die Verschaltung von Brennstoffableitung und Drainageleitung an einem Punkt stromabwärts von mindestens einem Schlussventil in der Brennstoffableitung vorgesehen ist, wobei stromaufwärts von dem mindestens einen Schlussventil eine Bypassleitung mit der Brennstoffableitung fluidtechnisch verschaltet ist, welche Bypassleitung die Brennstoffableitung mit dem Lecköltank fluidtechnisch verbindet.

Weiterhin werden die der Erfindung zugrundeliegenden Aufgaben gelöst durch ein Verfahren zum Spülen einer Gasturbine, insbesondere einer vorab wie auch nachfolgend dargestellten Gasturbine, welches folgende Schritte aufweist:
- Einleitung von Spülwasser aus einer Spülwasserleitung in eine Brennstoffzuleitung unter Druck derart, dass das Spülwasser wenigstens einen Teil des Brennstoffs in der Brennstoffzuleitung in Richtung Brenner verdrängt;
- Ableiten von Brennstoff aus der Brennstoffableitung mittels des Spülwassers;
- Unterbrechen eines Teils der Ableitung von Brennstoff in der Brennstoffableitung durch Schließen eines Schlussventils in der Brennstoffableitung zu einem Zeitpunkt T1;
- Aufrechterhalten des Ableitens von Brennstoff aus der Brennstoffableitung über eine Bypassleitung in einen Lecköltank nach dem Zeitpunkt T1, wobei die Bypassleitung mit der Brennstoffableitung stromaufwärts des Schlussventils fluidtechnisch verschaltet ist.

An dieser Stelle sei zunächst darauf hingewiesen, dass Brennstoffleitungen im Rahmen der vorliegenden Erfindung im Sinne einer Brennstoffzuleitung bzw. Brennstoffableitung bzw. damit versehenen Hilfsleitungen zu verstehen sind.

Die erfindungsgemäße Bypassleitung ist hierbei auch zum Ableiten von flüssigem Brennstoff in den Lecköltank ausgebildet bzw. vorgesehen. Das Ableiten entspricht hierbei einer Beförderung unter Anwendung der Prinzipien der Verdrängung.

Weiterhin ist darauf hinzuweisen, dass der erfindungsgemäße Lecköltank zum Druckausgleich typischerweise zur Umwelt hin offen ausgebildet bzw. öffenbar ausgebildet ist. Insofern kann bei Ableitung von Brennstoff bzw. Spülwasser in den Lecköltank ein Druckausgleich vorgenommen werden, so dass sich kein Druckaufbau ergeben kann, welcher das Spülen der Brennstoffleitungen drucktechnisch negativ beeinflussen könnte.

Weiter ist die Brennstoffableitung sowie die Brennstoffzuleitung im Normalfall mit einem Brennstoffvorratsbehältnis fluidtechnisch verschaltet, welches typischerweise ebenfalls einen Druckausgleich mit der Umgebung ermöglichen kann. Das Druckniveau in der Brennstoffableitung wird hierbei im Wesentlichen durch das Druckniveau in dem Brennstoffvorratsbehältnis bestimmt und insbesondere durch das Füllstandsniveau in diesem.

An dieser Stelle soll auch darauf hingewiesen werden, dass ein Schlussventil die vollständige Unterbrechung einer Strömung in einer Brennstoffleitung ermöglichen kann. Es unterscheidet sich damit von herkömmlichen Regel- bzw. Stellventilen, die keine Unterbrechung der Strömung in der betreffenden Leitung ermöglichen können, kann jedoch mit solchen auch identisch sein, soweit eine Schließstellung möglich ist. Insbesondere ist das Schlussventil als Kugelventil bzw. Schnellschlussventil ausgebildet.

Weiterhin sei darauf hingewiesen, dass die Strömungsrichtung in der Brennstoffableitung die Strömungsrichtung bei regelmäßigem Betrieb betreffen soll, bei welchen also Brennstoff von dem Brenner über die Brennstoffableitung etwa zu dem Brennstoffvorratsbehältnis rückgeführt wird. Die Strömungsrichtung des Brennstoffs in der Brennstoffableitung ist damit der Strömungsrichtung in der Brennstoffzuleitung entgegen gerichtet, da diese Brennstoff zum Brenner hinführt.

Erfindungsgemäß ist vorgesehen, die Gasturbine durch eine Bypassleitung zu erweitern, welche auch nach Schließen des wenigstens einen Schlussventils in der Brennstoffableitung weiterhin das Ableiten von Brennstoff aus der Brennstoffableitung in den Lecköltank ermöglichen kann. Die Bypassleitung ermöglicht also eine ventiltechnische Trennung von Brennstoffvorratsbehältnis und Teilen der Brennstoffableitung, wobei jedoch weiterhin der Spülvorgang mit Spülwasser aus der Spülwasserleitung zeitlich fortgesetzt werden kann. Aufgrund der Fortdauer des Spühlvorgangs auch nach Schluss des wenigstens einen Schlussventils kann eine ausreichende Reinigung der Brennstoffleitungen erfolgten.

Durch die verbesserte Spülung kann gewährleistet werden, dass die Brennstoffleitungen nach erfolgtem Abfahren der Gasturbine deutlich weniger Brennstoffrückstände aufweisen. Dies mindert einerseits die Risiken hinsichtlich eines unkontrollierten Brandes dieser Brennstoffrückstände und die sich daraus ergebenden Nachfolgeschäden. Ebenso wird die Verminderung von Verkokungserscheinungen dieser Brennstoffrückstände in den Brennstoffleitungen verbessert, wodurch eine Verstopfung von mit dem Brennstoff versorgten Düsen und sich daraus ergebende Betriebseinschränkungen bzw. Performance-Verminderung verhindert werden können.

An dieser Stelle soll auch nochmals drauf hingewiesen werden, dass der Druck in der Brennstoffableitung bei offenen Schlussventilen im Wesentlichen durch den Druck des Brennstoffvorratsbehältnis bestimmt ist. Der Druck in der Spülwasserleitung liegt im Vergleich hierzu meist deutlich höher (ca. 20 - 30 bar) und kann somit den sich in der Brennstoffzuleitung befindlichen Brennstoff aufgrund eines Druckgefälles hin zum Brenner verdrängen und reinigen. Die für die Verdrängung des Brennstoffes in der Brennstoffableitung maßgebliche Druckdifferenz ergibt sich jedoch aus der Druckdifferenz von Verdichterenddruck, welcher im Wesentlichen an den Brennstoffdüsen anliegt, und dem Druckniveau des Brennstoffvorratsbehältnisses, welches im Wesentlichen seinen Druck der Brennstoffableitung aufprägt. Da Gasturbinen, welche mit derartigen Brennstoffleitungen versehen sind, im Normalfall rücklaufgeregelte Brennstoffdüsen aufweisen, kann ein Rücklauf aus der Brennstoffableitung soweit vermieden werden, solange der Verdichterenddruck größer ist, als das Druckniveau in der Brennstoffableitung. Erst wenn diese Druckdifferenz sich Null nähert bzw. negativ ist, muss ein Rücklauf von Brennstoff bzw. Spülwasser aus der Brennstoffableitung zurück in die Brennstoffdüsen befürchtet werden. Einen solchen Rücklauf vermag jedoch die vorliegende Erfindung zu vermeiden.

Gemäß einer ersten besonders bevorzugten Ausführungsform der Erfindung ist vorgesehen, dass die Bypassleitung wenigstens ein Sperrventil aufweist, insbesondere zwei Sperrventile aufweist. Ein Sperrventil erlaubt hierbei wiederum, vergleichbar einem Schlussventil, die vollständige Unterbrechung der Fluidströmung in einer Leitung. Das Sperrventil kann ebenso wie das Schlussventil bspw. als Schnellschlussventil ausgebildet sein, ist jedoch gemäß einer anderen bevorzugten Ausführungsform als Kugelventil ausgebildet. Das Vorsehen von zwei Sperrventilen kann hierbei die Betriebssicherheit erhöhen, indem etwa bei Versagen eines Sperrventils das zweite Sperrventil die Sperraufgabe erledigen kann. Das Versehen der Bypassleitung mit wenigstens einem Sperrventil ermöglicht während des Spülvorganges die Unterbrechung der Bypassleitung, wonach die Ableitung von Brennstoff lediglich noch über die Brennstoffableitung hin zum Brennstoffvorratsbehältnis erfolgen könnte, soweit die Schlussventile geöffnet sind. Dies setzt voraus, dass während dieses Spülvorganges die Drainageleitung ebenfalls unterbrochen ist, soweit diese überhaupt für eine Abführung von Brennstoff in den Lecköltank ausgebildet ist. Meist ist dies jedoch nicht der Fall, da die Drainageleitung lediglich zur Beförderung von nur geringen Mengen an Brennstoff ausgebildet ist.

Gemäß einer weiteren möglichen Ausführungsform der Erfindung ist vorgesehen, dass die Drainageleitung wenigstens ein Sperrventil aufweist. Das Sperrventil der Drainageleitung erlaubt, wie bereits oben ausgeführt, die vollständige Unterbrechung einer Fluidströmung in der Drainageleitung. Hierdurch kann die Drainageleitung während des Spülvorganges unterbrochen werden. Ebenso kann die Drainageleitung aber auch gezielt geöffnet werden, um etwa Teilabschnitte der Brennstoffableitung, welche nicht weiter durch Spülwasser gespült werden können, zu entleeren. Ganz besonders bevorzugt ist vorgesehen, dass die Drainageleitung als Druckentlastungsleitung ausgebildet ist, deren Querschnitt insbesondere kleiner ist, als der Querschnitt der Bypassleitung. Insofern kann die Drainageleitung nicht vergleichbar zur Abführung von größeren Mengen von Brennstoff und Spülwasser genutzt werden, wie es etwa die Bypassleitung erlaubt.

Eine solche Entleerung bzw. Druckentlastung ist insbesondere dann vorteilhaft vorzusehen, wenn nach einer weiteren Ausführungsform der erfindungsgemäßen Gasturbine die Brennstoffableitung mindestens zwei Schlussventile aufweist, und die Drainageleitung mit der Brennstoffableitung zwischen den beiden Schlussventilen fluidtechnisch verschaltet ist. Sind die beiden Schlussventile nämlich während des Spülvorgangs etwa vollständig geschlossen, kann der in der Brennstoffableitung zwischen den beiden Schlussventilen befindliche Brennstoff, über die Drainageleitung wenigstens teilweise in den Lecköltank abgeleitet werden, bzw. ein Druckaufbau kann effizient verhindert werden. In erster Linie kann also die Drainageleitung der verbesserten Sicherheit bei Betrieb dienen.

Gemäß einer ersten besonders bevorzugten Ausführungsform des erfindungsgemäßen Verfahrens ist vorgesehen, dass die Einleitung von Spülwasser aus der Spülwasserleitung in die Brennstoffzuleitung beim Abfahren der Gasturbine erfolgt, insbesondere solange noch ein Verdichterenddruck von wenigstens 1,5 bar vorherrscht. Besonders bevorzugt ist der Verdichterenddruck hierbei über dem Druckniveau des Brennstoffvorratsbehältnisses. Aufgrund der geeigneten Druckdifferenz zwischen Verdichterenddruck und dem Druck in der Brennstoffableitung kann weder Brennstoff noch Spülwasser durch die Brenner in die Brennkammer gelangen. Vielmehr gewährleistet der verhältnismäßig größere Verdichterenddruck, dass der abzuleitende Brennstoff bzw. dass Spülwasser über die Brennstoffableitung zum Lecköltank bzw. wieder zum Brennstoffvorratsbehältnis gelangen kann. Erst, wenn der Verdichterenddruck unter das Druckniveau des Brennstoffvorratsbehältnisses fällt, kann es zu einem Austritt in den Brenner und damit in die Brennkammer kommen. Ein solcher Vorfall soll jedoch vermieden werden.

Gemäß einer weiteren besonders bevorzugten Ausführungsform des erfindungsgemäßen Verfahrens ist vorgesehen, dass nach einem zweiten Zeitpunkt T2, welcher größer ist als der erste Zeitpunkt T1, also nach diesem folgt, mindestens ein Sperrventil in der Bypassleitung geschlossen wird, um damit das Ableiten von Brennstoff aus der Brennstoffableitung über die Bypassleitung in den Lecköltank zu unterbrechen. Damit ist der Spülvorgang nach dem Zeitpunkt T2 beendet. Eine weitergehende Spülung über die Brennstoffableitung wird durch das wenigstens eine geschlossene Schlussventil verhindert. Insofern bestimmt der zweite Zeitpunkt T2 die Länge der Spüldauer und damit die Effizienz der Spülung in den Brennstoffleitungen. Aufgrund von internen Versuchen, hat die Anmelderin herausgefunden, dass eine Zeitdauer von 1 bis 2 Minuten besonders geeignet ist, da hierdurch einerseits ein Spülwasser sparender Spülvorgang vorgenommen werden kann, gleichzeitig jedoch auch eine ausreichende Spülwirkung erreicht werden kann. Ebenso hat die Anmelderin bei ihren Versuchen in Erfahrung bringen können, dass der erste Zeitpunkt T1, zu welchem die Schlussventile in der Brennstoffableitung geschlossen werden, bevorzugt eine halbe bis dreiviertel Minute betragen sollte.

Nachfolgend wird die Erfindung anhand von einzelnen Figuren im Detail näher erläutert. Hierbei weisen die technischen Merkmale, die mit gleichen Bezugszeichen versehen sind, gleiche technische Wirkungen auf.

Ebenso sei darauf hingewiesen, dass die nachfolgend dargestellten Ausführungsformen der Erfindung lediglich schematisch zu verstehen sind, und keine Einschränkungen hinsichtlich der Ausführbarkeit der Erfindung daraus abzuleiten sind.

Fernerhin werden die in den nachfolgenden Figuren dargestellten einzelnen technischen Merkmale in beliebiger Kombination miteinander beansprucht, wobei die Kombination die der Erfindung zugrundeliegenden Aufgaben lösen soll.

Hierbei zeigen:
- Figur 1: eine schematische Teilschaltansicht einer Ausführungsform der erfindungsgemäßen Gasturbine 1;
- Figur 2: eine flussdiagrammatische Darstellung einer Ausführungsform des erfindungsgemäßen Verfahrens zum Spülen einer solchen vorab, wie auch nachfolgend dargestellten Gasturbine.

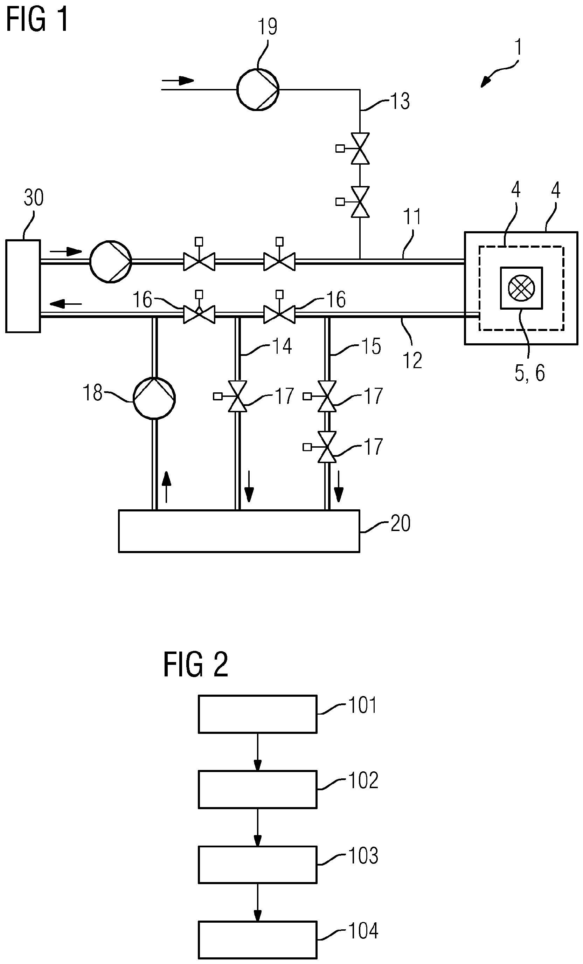

Figur 1 zeigt eine schematische Teilschaltansicht einer Ausführungsform der erfindungsgemäßen Gasturbine 1, welche neben einer ein Brennstoffverteilungssystem 4 mit Brennstoff versorgenden Brennstoffzuleitung 11, ebenfalls eine Brennstoffableitung 12 vorsieht, über welche Brennstoff wieder aus dem Brennstoffverteilungssystem entnommen werden kann. Das Brennstoffverteilungssystem 4 kann bspw. aus Brennstoffverteilungsringen bestehen, welche die Gasturbine 1 umgeben, und über nicht weiter dargestellte Stichleitungen Brenner 5 (bzw. eine Mehrzahl an Brennern 5) mit Brennstoff versorgen. Das Brennstoffverteilungssystem 4 weist bevorzugt rücklaufgeregelte Brennstoffdüsen auf. Vorliegend ist der Brenner 5 zusammen mit der Brennkammer 6 schematisch angedeutet. Die konkrete Ausführung des Brennstoffverteilungssystems 4 ist vorliegend ebenfalls nur schematisch angedeutet.

Der die Gasturbine 1 versorgende Brennstoff wird aus einem Brennstoffvorratsbehältnis 30 entnommen, welches fluidtechnisch sowohl mit der Brennstoffzuleitung als auch mit der Brennstoffableitung 12 verschaltet ist.
Die Spülung der Brennstoffzuleitung wie auch Brennstoffableitung 12 erfolgt mittels Spülwasser aus einer Spülwasserleitung 13, die mit der Brennstoffzuleitung 11 fluidtechnisch verschaltet ist. Die Spülwasserleitung 13 weist hierbei eine Pumpe 19 auf, die Spülwasser aus einem nicht weiter gezeigten Behältnis zur Brennstoffzuleitung unter Druck führen kann. Ein Rücklauf von Spülwasser in der Brennstoffzuleitung 11 hin zum Brennstoffvorratsbehältnis 30, wird durch nicht weiter mit Bezugszeichen versehene Ventile verhindert, die sich dabei in einer Schließstellung befinden. Die Spülung erfolgt insofern derart, dass bei Druckaufbau durch die Pumpe 19 Spülwasser aus der Spülleitung 13 in die Brennstoffzuleitung 11 gegeben wird, wodurch der in der Brennstoffzuleitung 11, dem Brenner 5 und der Brennstoffableitung befindliche Brennstoff verdrängt wird.

Typischerweise erfolgt der Beginn des Spülvorganges zu einem Zeitpunkt während des Abfahrens der Gasturbine 1. Hierbei liegt am Ende des Verdichters der Verdichterenddruck vor, der größer ist, als derjenige Druck, welcher durch das Brennstoffvorratsbehältnis 30 der Brennstoffableitung 12 aufgeprägt wird. Insofern wird ein Abfließen des Brennstoffs bzw. des Spülwassers in den Brenner 5 und damit in die Brennkammer 6 verhindert. Zudem wird der Brennstoff in Richtung zur Brennstoffableitung 12 hin verdrängt, über welcher er entweder dem Brennstoffvorratsbehältnis 30 bei offenen Schlussventilen 16 oder aber über die Bypassleitung 15 bei offenen Sperrventilen 17 dem Lecköltank zugeleitet wird.

Die Brennstoffableitung 12 weist insgesamt vorliegend zwei Schlussventile 16 auf, welche im Wesentlichen die gleiche Funktion erfüllen können, jedoch durch die Verdopplung der Ventilanzahl eine höhere Betriebssicherheit erreichen. Die Brennstoffableitung ist stromaufwärts vor dem dem Brenner am nächsten zugeordneten Schlussventil 16 mit einer Bypassleitung 15 fluidtechnisch verschaltet, so dass eine Ableitung von Brennstoff über diese Bypassleitung 15 auch bei geschlossenen Schlussventilen 16 erfolgen kann. Über die Bypassleitung 15 ist ein Lecköltank 20 mit der Brennstoffableitung 12 fluidtechnisch verschaltet. Weiter weist die Bypassleitung 15 zwei Sperrventile 17 auf, die vergleichbar den Schlussventilen 16, eine Unterbrechung der Strömung in der Bypassleitung 15 bewirken können.

Der Lecköltank 20 ist weiterhin fluidtechnisch mit einer Drainageleitung 14 verschaltet, wobei die Drainageleitung 14 zwischen den beiden Schlussventilen 16 in die Brennstoffableitung 12 mündet. Ist folglich das dem Brenner 5 am nächsten zugeordnete Schlussventil 16 geschlossen, kann über die Drainageleitung 14 im Normalfall kein weiterer Brennstoff bzw. Spülwasser aus der Brennstoffableitung 16 in den Lecköltank 20 abgeführt werden. Darüber hinaus ist die Drainageleitung 14 hinsichtlich ihrer maximal ableitbaren Strömungsmenge normalerweise nicht dazu ausgebildet, während des Spülvorganges zur Ableitung von Brennstoff und Spülwasser in den Lecköltank 20 eingesetzt zu werden. Vielmehr hat die Drainageleitung 14 oftmals die Funktion, eine Druckentlastung in dem Leitungsabschnitt der Brennstoffableitung 12 zwischen den beiden Schlussventilen 16 zu gewährleisten, indem etwa ein Teil des Brennstoffes in den Lecköltank entleert wird, wenn beide Schlussventile 16 ordnungsgemäß geschlossen sind.

Weiterhin ist die Brennstoffableitung 12 in einem Abschnitt stromabwärts nach dem in Bezug auf den Brenner 5 am entferntesten angeordneten Schlussventil 16 mit einer nicht weiter mit Bezugszeichen versehenen Entleerungsleitung fluidtechnisch verschaltet. Die Entleerungsleitung weist eine Pumpe 18 auf, die ermöglicht, dass das sich in dem Lecköltank befindliche Spülwasser bzw. der Brennstoff bei geschlossenen Schlussventilen 16 in das Brennstoffvorratsbehältnis 30 zu pumpen.

Wird nun zum Zeitpunkt T0 ein Spülvorgang eingeleitet, wird über die Spülwasserleitung 13 zunächst Spühlwasser in die Brennstoffzuleitung 11 geführt. Aufgrund der Verdrängung des in der Brennstoffzuleitung, dem Brenner 5 und der Brennstoffableitung 12 befindlichen Brennstoffs, wird der Brennstoff bei geöffneten Schlussventilen 16 und bei geöffneten Sperrventilen 17 teilweise in das Brennstoffvorratsbehältnis 30 über die Brennstoffableitung 12 sowie teilweise über die Bypassleitung 15 in den Lecköltank 20 abgeleitet. Dies setzt natürlich geeignete Druckverhältnisse in der Brennstoffableitung 16, wie oben beschrieben, voraus. Zu einem ersten Zeitpunkt T1 werden anschließend die beiden Schlussventile 16 in der Brennstoffableitung 12 geschlossen, wodurch der Brennstoffableitung 12 nicht mehr der Druck des Brennstoffvorratsbehältnis 30 aufgeprägt wird. Es findet also eine Druckentkoppelung statt. Nach dem ersten Zeitpunkt T1 werden insofern lediglich die beiden Sperrventile 17 in der Bypassleitung 15 weiterhin offen bleiben, so dass der in der Brennstoffableitung 12 abgeleitete Brennstoff über die Bypassleitung 15 in den Lecköltank 12 abgeführt wird. Hierbei bestimmt nun im Wesentlichen der Lecköltank nach dem Zeitpunkt T1 die Druckverhältnisse in der Brennstoffableitung 12. Nach einem zweiten Zeitpunkt T2 werden bei ausreichender Spülung die beiden Sperrventile 17 in der Bypassleitung 15 geschlossen, womit der Spülvorgang beendet ist. Um den Abschnitt der Brennstoffableitung 12 zwischen den beiden geschlossenen Schlussventilen 16 noch zu entleeren bzw. den Druck nicht über einen Grenzwert steigen zu lassen, kann das bisher geschlossene Sperrventil 17 in der Drainageleitung 14 geöffnet werden, um somit den darin sich befindlichen Brennstoff in den Lecköltank 20 wenigstens teilweise zu überführen.

Figur 2 zeigt eine Ausführungsform des erfindungsgemäßen Verfahrens zum Spülen einer Gasturbine 1, welches die folgenden Schritte aufweist:
- Einleitung von Spülwasser aus einer Spülwasserleitung (13) in eine Brennstoffzuleitung (11) unter Druck derart, dass das Spülwasser (13) wenigstens einen Teil des Brennstoffs in der Brennstoffzuleitung (11) in Richtung Brenner (5) verdrängt (erster Verfahrensschritt 101);
- Ableiten von Brennstoff aus der Brennstoffableitung (12) mittels des Spülwassers (zweiter Verfahrensschritt 102);
- Unterbrechen eines Teils der Ableitung von Brennstoff in der Brennstoffableitung (12) durch Schließen eines Schlussventils (16) in der Brennstoffableitung (12) zu einem Zeitpunkt T1 (dritter Verfahrensschritt 103);
- Aufrechterhalten des Ableitens von Brennstoff aus der Brennstoffableitung (12) über eine Bypassleitung (15) in einen Lecköltank (20) nach dem Zeitpunkt T1, wobei die Bypassleitung (15) mit der Brennstoffableitung (12) stromaufwärts des Schlussventils (16) mit der Brennstoffableitung (12) fluidtechnisch verschaltet ist (vierter Verfahrensschritt 104).

Weitere Ausführungsformen ergeben sich aus den Unteransprüchen.

## Patentansprüche

1. Gasturbine (1) mit einem Brenner (5), welche mindestens eine Brennstoffzuleitung (11) und mindestens eine Brennstoffableitung (12) aufweist, wobei mit der Brennstoffzuleitung (11) eine Spülwasserleitung (13) fluidtechnisch verschaltet ist, und wobei mit der Brennstoffableitung (12) ein Lecköltank (20) über eine Drainageleitung (14) fluidtechnisch verschaltet ist und die Verschaltung von Brennstoffableitung (12) und Drainageleitung (14) an einem Punkt stromabwärts von mindestens einem Schlussventil (16) in der Brennstoffableitung (12) vorgesehen ist,
**dadurch gekennzeichnet, dass**
stromaufwärts von dem mindestens einen Schlussventil (16) eine Bypassleitung (15) mit der Brennstoffableitung (12) fluidtechnisch verschaltet ist, welche Bypassleitung (15) die Brennstoffableitung (12) mit dem Lecköltank (20) fluidtechnisch verbindet.

2. Gasturbine nach Anspruch 1,
**dadurch gekennzeichnet, dass**
die Bypassleitung (15) wenigstens ein Sperrventil (17) aufweist, insbesondere zwei Sperrventile (17) aufweist.

3. Gasturbine nach einem der vorhergehenden Ansprüche, **dadurch gekennzeichnet, dass**
die Drainageleitung (14) wenigstens ein Sperrventil (17) aufweist.

4. Gasturbine nach einem der vorhergehenden Ansprüche,
**dadurch gekennzeichnet, dass**
die Brennstoffableitung (12) mindestens zwei Schlussventile (16) aufweist, und die Drainageleitung (14) mit der Brennstoffableitung (12) zwischen den beiden Schlussventilen (16) fluidtechnisch verschaltet ist.

5. Verfahren zum Spülen einer Gasturbine (1) nach einem der vorhergehenden Ansprüche, welches folgende Schritte aufweist:
- Einleitung von Spülwasser aus einer Spülwasserleitung (13) in eine Brennstoffzuleitung (11) unter Druck derart, dass das Spülwasser (13) wenigstens einen Teil des Brennstoffs in der Brennstoffzuleitung (11) in Richtung Brenner (5) verdrängt;
- Ableiten von Brennstoff aus der Brennstoffableitung (12) mittels des Spülwassers;
- Unterbrechen eines Teils der Ableitung von Brennstoff in der Brennstoffableitung (12) durch Schließen eines Schlussventils (16) in der Brennstoffableitung (12) zu einem Zeitpunkt T1.
- Aufrechterhalten des Ableitens von Brennstoff aus der Brennstoffableitung (12) über eine Bypassleitung (15) in einen Lecköltank (20) nach dem Zeitpunkt T1, wobei die Bypassleitung (15) mit der Brennstoffableitung (12) stromaufwärts des Schlussventils (16) fluidtechnisch verschaltet ist.

6. Verfahren nach Anspruch 5,
**dadurch gekennzeichnet, dass**
die Einleitung von Spülwasser aus der Spülwasserleitung (13) in die Brennstoffzuleitung (11) beim Abfahren der Gasturbine (1) erfolgt, insbesondere solange noch ein Verdichterenddruck von wenigstens 1,5 bar vorherrscht, wobei besonders bevorzugt der Verdichterenddruck über dem Druckniveau des Brennstoffvorratsbehältnisses (30) ist.

7. Verfahren nach Anspruch 5 oder 6,
**dadurch gekennzeichnet, dass**
nach einem zweiten Zeitpunkt T2, welcher größer ist als der erste Zeitpunkt T1, mindestens ein Sperrventil (17) in der Bypassleitung (15) geschlossen wird, um damit das Ableiten von Brennstoff aus der Brennstoffableitung (12) über die Bypassleitung (15) in den Lecköltank (20) zu unterbrechen.

## Claims

1. Gas turbine (1) with a burner (5) which has at least one fuel supply line (11) and at least one fuel removal line (12), wherein the fuel supply line (11) is fluidically connected to a flush water line (13), and wherein the fuel removal line (12) is fluidically connected, via a drainage line (14), to a leakage oil tank (20) and the fuel removal line (12) and the drainage line (14) are connected at a point downstream of at least one closure valve (16) in the fuel removal line (12),
**characterized in that**
upstream of the at least one closure valve (16) a bypass line (15) is fluidically connected to the fuel removal line (12), which bypass line (15) fluidically connects the fuel removal line (12) to the leakage oil tank (20).

2. Gas turbine according to Claim 1,
**characterized in that**
the bypass line (15) has at least one shutoff valve (17), in particular two shutoff valves (17).

3. Gas turbine according to one of the preceding claims,
**characterized in that**
the drainage line (14) has at least one shutoff valve (17).

4. Gas turbine according to one of the preceding claims,
**characterized in that**
the fuel removal line (12) has at least two closure valves (16) and the drainage line (14) is fluidically connected to the fuel removal line (12) between the two closure valves (16).

5. Method for flushing a gas turbine (1) according to one of the preceding claims, which has the following steps:
- introducing flush water from a flush water line (13) into a fuel supply line (11) under pressure such that the flush water (13) displaces at least part of the fuel in the fuel supply line (11) in the direction of the burner (5) ;
- removing fuel from the fuel removal line (12) by means of the flush water;
- interrupting part of the removal of fuel in the fuel removal line (12) by closing a closure valve (16) in the fuel removal line (12) at a time T1;
- maintaining the removal of fuel from the fuel removal line (12) via a bypass line (15) into a leakage oil tank (20) after the time T1, wherein the bypass line (15) is fluidically connected to the fuel removal line (12) upstream of the closure valve (16).

6. Method according to Claim 5,
**characterized in that**
the introduction of flush water from the flush water line (13) into the fuel supply line (11) during shutdown of the gas turbine (1) takes place in particular as long as a compressor end pressure of at least 1.5 bar still prevails, wherein particularly preferably the compressor end pressure is above the pressure level of the fuel supply container (30).

7. Method according to Claim 5 or 6,
**characterized in that**
after a second time T2, greater than the first time T1, at least one shutoff valve (17) in the bypass line (15) is closed in order to thus interrupt the removal of fuel from the fuel removal line (12) via the bypass line (15) into the leakage oil tank (20).

## Revendications

1. Turbine (1) à gaz comprenant un brûleur (5), qui a au moins un conduit (11) d'apport de combustible et au moins un conduit (12) d'évacuation de combustible, un conduit (13) d'eau de lavage est relié en technique des fluides avec le conduit (11) d'apport de combustible, et une cuve (20) à huile de fuite est reliée en technique des fluides au conduit (12) d'évacuation de combustible par un conduit (14) de drainage, et la liaison du conduit (12) d'évacuation de combustible et du conduit (14) de drainage est prévue en un point en aval d'au moins un robinet (16) de terminaison dans le conduit (12) d'évacuation de combustible,
**caractérisée en ce que**
un conduit (15) de dérivation est relié en technique des fluides au conduit (12) d'évacuation de combustible en amont du au moins un robinet (16) de terminaison, lequel conduit (15) de dérivation relie en technique des fluides le conduit (12) d'évacuation de combustible à la cuve (20) d'huile de fuite.

2. Turbine à gaz suivant la revendication 1,
**caractérisée en ce que**
le conduit (15) de dérivation a au moins un robinet (17) d'arrêt, notamment deux robinets (17) d'arrêt.

3. Turbine à gaz suivant l'une des revendications précédentes,
**caractérisée en ce que**
le conduit (14) de drainage a au moins un robinet (17) d'arrêt.

4. Turbine à gaz suivant l'une des revendications précédentes,
**caractérisée en ce que**
le conduit (12) d'évacuation de combustible a au moins deux robinets (16) de terminaison et le conduit (14) de drainage est relié en technique des fluides au conduit (12) d'évacuation de combustible entre les deux robinets (16) de terminaison.

5. Procédé de lavage d'une turbine (1) à gaz suivant l'une des revendications précédentes, qui a les stades suivantes :
- envoi d'eau de lavage d'un conduit (13) d'eau de lavage dans un conduit (11) d'apport de combustible sous pression, de manière à ce que l'eau (13) de lavage refoule au moins une partie du combustible dans le conduit (11) d'apport de combustible en direction du brûleur (5) ;
- évacuation de combustible du conduit (12) d'évacuation de combustible au moyen de l'eau de lavage ;
- interruption d'une partie de l'évacuation de combustible dans le conduit (12) d'évacuation de combustible par fermeture d'un robinet (16) de terminaison dans le conduit (12) d'évacuation de combustible à l'instant T1.
- maintien de l'évacuation de combustible du conduit (12) d'évacuation de combustible dans une cuve (20) d'huile de fuite, par l'intermédiaire d'un conduit (15) de dérivation, après l'instant T1, le conduit (15) de dérivation étant relié en technique des fluides au conduit (12) d'évacuation de combustible, en aval du robinet (16) de terminaison.

6. Procédé suivant la revendication 5,
**caractérisé en ce que**
l'introduction d'eau de lavage du conduit (13) d'eau de lavage dans le conduit (11) d'apport de combustible s'effectue à l'arrêt de la turbine (1) à gaz, notamment tant qu'il règne encore une pression finale de compresseur d'au moins 1,5 bar, dans lequel d'une manière particulièrement préférée, la pression finale du compresseur est supérieure au niveau de pression du réservoir (30) de combustible.

7. Procédé suivant la revendication 5 ou 6,
**caractérisé en ce que**
après un deuxième instant T2, qui est plus tardif que le premier instant T1, on ferme au moins un robinet (7) d'arrêt dans le conduit (15) de dérivation et on interrompt ainsi l'évacuation de combustible du conduit (12) d'évacuation de combustible à la cuve (20) d'huile de fuite, par l'intermédiaire du conduit (15) de dérivation.
